# EUROPEAN PATENT SPECIFICATION

(11) **EP 4 521 159 B1**
(45) Date of publication and mention of the grant of the patent: **04.11.2026**
(21) Application number: 23306508.5
(22) Date of filing: 11.09.2023
(51) Int. Cl.: G02C 7/02

(54) **METHOD FOR PROVIDING A LENS ELEMENT**
VERFAHREN ZUR BEREITSTELLUNG EINES LINSENELEMENTES
PROCÉDÉ DE FOURNITURE D'UN ÉLÉMENT DE LENTILLE

(43) Date of publication of application: 12.03.2025
(73) Proprietor: Essilor International, 94220 Charenton-Le-Pont (FR)
(72) Inventor: GUILLOT, Matthieu, 92130 ISSY LES MOULINEAUX (FR); GACOIN, Eric, 75011 PARIS (FR)
(74) Representative: Cabinet Novitech

(56) References cited:
- WO-A1-2017/192333
- WO-A1-2018/152595
- WO-A1-2022/254389
- US-A1- 2013 100 403
- US-A1- 2021 354 410
- US-A1- 2022 244 542
- US-A1- 2023 034 749
- US-A1- 2023 200 975
- US-A1- 2023 221 579

## Description

### TECHNICAL FIELD

The disclosure relates to a method for providing a lens element, and more particularly to a method for obtaining a lens element comprising a plurality of encapsulated diffractive microstructures, as well as a lens element obtained using said method. The invention relates to the computer implemented method of providing a lens element.

### BACKGROUND

Over the years, designs of optical lenses have been made more and more complex. This increase of the complexity of the designs has rendered more difficult the processes to manufacture them.

Recent improvement in the field of controlling the progression of myopia have led to a significant increase in the number of designs of optical lenses comprising lenslets. The purpose of this array of microlenses is to provide an optical blurred image, other than on the retina, for example in front of the retina, triggering a stop signal that limits the eyes growth, while enabling a good vision.

While these myopia control lenses have extremely complex surfacic shape involving very small features, they are usually manufactured using common technics such as molding or grinding. However, to obtain lenses having different levels of myopia control, the lens manufacturers have been required to use a wider range of molds which are expansive to build and stock. Similarly, the time required to grind the lens element surface to obtain this very small features has increase which also increase the risk of error to occur and to deviate from the target.

Similarly, personalization of the lens element to be more adapted to the wearer and/or to specific spectacle frames increases tends to complicate the manufacturing process of lens elements.

Methods and lenses of the prior art are disclosed in US2013/100403A1 and US2021/354410A1.

Therefore, there is a need to provide a solution that simplify the process to provide a wide range of lens elements with different optical functions.

### SUMMARY

To this end, the invention relates to a computer implemented method of providing a lens element for the purpose of being manufactured, the lens element comprising a plurality of encapsulated diffractive microstructures, the method comprising:
- obtaining first lens member data, the first lens member data comprising at least data relating to a shape of a first lens member and to a first refractive index n₁ of the first lens member, at least one surface (F1) of the first lens member comprising a plurality of diffractive microstructures,
- obtaining second lens member data, the second lens member data comprising at least data relating to a shape of a second lens member and to a second refractive index n₂ of the second lens member, the second lens member comprising at least one surface (F2) complementary to the surface of the first lens member comprising the plurality of diffractive microstructures,
- generating a lens element model based on the first and second lens member data, the lens element model being formed by applying the complementary surfaces of the first and second lens member together,
- obtaining energy balance data, the energy balance data comprising at least data relating to at least two maximum levels of MTF in at least two distinct planes (z₁, z₂),
- optimizing the lens element model based on the energy balance data, the lens member being optimized by varying at least one of the first and second refractive index n₁ and n₂ of the first and second lens member so that over at least one pupil englobing at least part of the plurality of diffractive microstructures of the lens member, the at least two maximum levels of MTF can be measured in the at least two distinct planes (z₁, z₂);
- providing the lens element by assembling at least the first and second lens members based on the optimized lens element model.

Advantageously, the method allows providing a wide range of lens elements having different optical properties without having to modify the surface design of said lens elements. Indeed, the Inventors have observed that varying the difference of index of refraction of the material used to form the lens element allows varying the optical properties of said lens element.

According to further embodiments which can be considered alone or in combination:
- the method further comprises providing prescription data, the prescription data relating at least to a prescription adapted for a wearer; and manufacturing an ophthalmic lens from the lens element based on the prescription data; and/or
- during the step of manufacturing the ophthalmic lens, at least one surface of the lens element is modified so that the first plane z₁ in which a maximum level of MTF can be measured over the pupil coincides with the plane of the retina of the wearer; and/or
- during the step of manufacturing the ophthalmic lens, at least one surface of the lens element is modified so that the second plane z₂ in which a maximum level of MTF can be measured over the pupil is located in front or behind the plane of the retina of the wearer; and/or
- at least part, for example all, of the plurality of diffractive microstructures are arrays of lenslets; and/or
- the lenslets are organized over the entire surface of the lens element; and/or
- at least part, for example all, of the lenslets are non-contiguous; and/or
- at least part, for example all, of the lenslets are contiguous; and/or
- the lenslets have a contour shape circumscribed by a circle having a diameter smaller than or equal to 3.0 mm, for example smaller than or equal to 1.5 mm, for example smaller than or equal to 1.0 mm, and the largest inscribed circle has a diameter greater than or equal to 0.1 mm, for example greater than or equal to 0.6 mm; and/or
- the lenslets are organized in concentric rings; and/or
- at least part, preferably all, of the plurality of diffractive microstructures are diffractive lenslets; and/or
- at least part, preferably all, of the diffractive lenslets are π-Fresnel lenslets; and/or
- the at least two maximum levels of MTF measured in the planes z₁ and z₂ correspond to the first order of diffraction and the second order of diffraction of the π-Fresnel lenslets; and/or
- at least one of the first or second lens member is a wafer, a film sheet, an adhesive layer, or a coating layer; and/or

The disclosure further relates to a lens element comprising a plurality of encapsulated diffractive microstructures obtained using the method according to the disclosure.

### BRIEF DESCRIPTION OF THE DRAWINGS

Embodiments of the invention will now be described, by way of example only, and with reference to the following drawings in which:
- Figure 1 illustrates a schematic profile view of a lens element obtained according to an embodiment of the disclosure;
- Figures 2A to 2C illustrates schematic profile view of a lens element obtained according to an embodiment of the disclosure;
- Figure 3 illustrates a schematic front view of a lens element obtained according to an embodiment of the disclosure;
- Figures 4 illustrates schematic front view of a lens element obtained according to an embodiment of the disclosure; and
- Figures 5 illustrates chart-flow of the method of providing a lens element according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

### DETAILLED DESCRIPTION

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to a method for providing a lens element comprising a plurality of diffractive microstructures.

### 1. LENS ELEMENT

In the context of the present invention, the term "lens element" can refer to a lens blank or semi-finished lens or an optical lens or a spectacle optical lens edged to fit a specific spectacle frame or an ophthalmic lens, or an optical device adapted to be positioned on an ophthalmic lens, a film, or a wafer.

### 1.1. LENS MEMBER

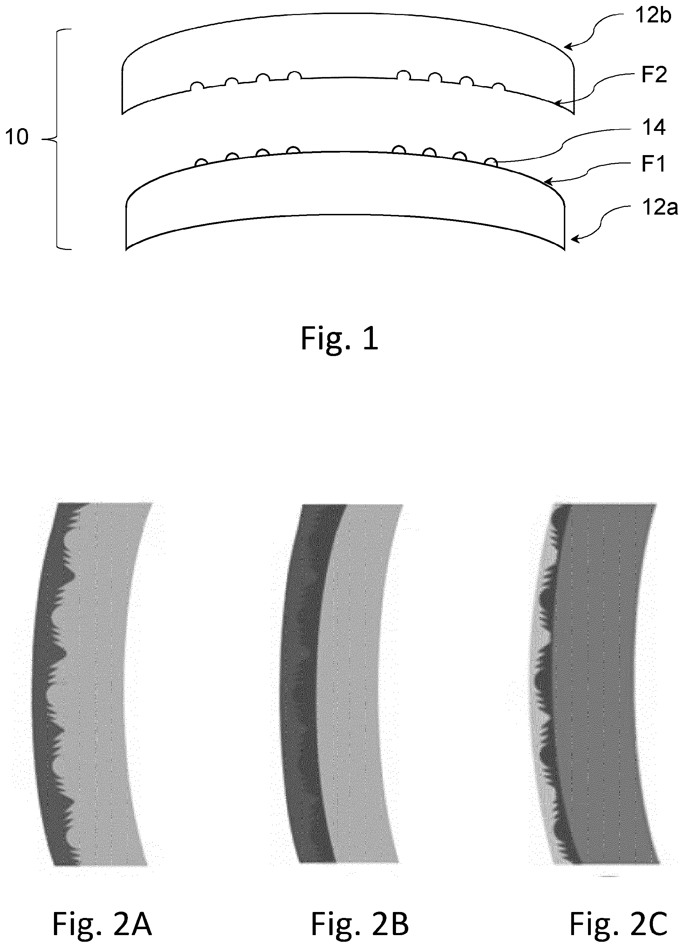

As represented in figure 1, the lens element 10 is formed by at least a first lens member 12a and a second lens member 12b.

The first lens member 12a may comprise an eye side surface formed as a concave surface and a surface F1 opposed to the eye side surface. The second lens member 12b may comprise an object side surface formed as a convex curved surface toward an object side and a surface F2 opposed to the object side surface. Alternatively, the object side surface and/or the eye side surface may be any one of a plano surface, a convex surface, or a concave surface. The surface F1 of the first lens member 12a and the surface F2 of the second lens member 12b are complementary surfaces. Both complementary surfaces F1 and F2 are designed to fit precisely into the other to ensure a tight and secure fit when the two lens member are brought together.

At least one complementary surface F1 or F2 comprises a plurality of diffractive microstructures 14. In the embodiment illustrated in figure 1, the diffractive microstructures 14 are disposed on surface F1 of the first lens member 12a. However, it should be understood that the plurality of diffractive microstructures may be disposed on any complementary surface F1 and/or complementary surface F2. The plurality of diffractive microstructures may be engraved, imprinted, etched, molded, or embossed directly on the surface of a lens member. When the complementary surfaces F1 and F2 are put together, the plurality of diffractive microstructures becomes encapsulated within the lens element. In the sense of the invention, "being encapsulated" should be understood as being surrounded, encased, protected in, or isolated from the outside, as if in a capsule.

The lens element may further comprise at least one additional lens member disposed on any of the first or second lens members. For example, the lens element can comprise a third lens member forming a coating layer disposed on the object side surface of the second lens member. Another lens member may be a support wafer disposed on the eye side surface of the first lens member. The additional lens member may be made of a common material with at least one of the first or second lens members, and thus have the same index of refraction. Alternatively, the additional lens member may be made of a different material from the first and second lens member, and thus have a different index of refraction.

The first and/or second lens members may be a lens wafer, a film sheet, a layer of glue, a layer of adhesive, a layer of coating element, or a layer of resin.

In the example illustrated in figure 2a, the first lens member 12a is a lens wafer made of a first material having a first index of refraction n₁ and the second lens member 12b is lens wafer made of a second material having a second index of refraction n₂. The complementary surface F1 of the first lens member 12a comprises a plurality of diffractive microstructures 14 made of the same first material.

Lens wafers are usually obtained through usual molding processes, for example injection molding or cast molding. In a non-limiting example, the first lens member 12a is firstly manufactured by injecting the first material into a first master mold, and pressing it against a microstructure pattern of the first master mold. Through hot embossing, the inverse structure of the pattern will be transferred on the surface of the first lens member 12a to form the plurality of diffractive microstructure 14. The manufactured first lens member 12a is further introduced into a second master mold and the second material is injected and overmolded on the first lens member to form the second lens member 12b.

In the example illustrated in figure 2b, the first lens member 12a is a film sheet made of a first material having a first index n₁, on which a plurality of diffractive microstructures 14 have been imprinted on, for example using usual lithography techniques, or edged on. The first lens member 12a is disposed on an additional third lens member 12c which is a support lens wafer. A layer of glue is further added over the first lens member to maintain it on the support lens wafer. This layer of glue forms the second lens member 12b made of a second material having a second index of refraction n₂.

In the example illustrated in figure 2c, the first lens member 12a is directly imprinted using a first material having a first index of refraction n₁ over the surface of an additional third lens member 12c, for example a support lens wafer. A layer of coating is further applied over the first lens member 12a, for example using common techniques such as casting, overmolding or imprinting. The layer of coating forms the second lens member 12b made of a second material having a second index of refraction n₂.

The first and/or second lens members may be made of any suitable material such as mineral material like glass, or organic material like plastic, resin, epoxy glue, hot melt glue, UV adhesive, pressure sensitive adhesive, rubber. For example, the first and/or the second lens member material may be any of polycarbonate, co-polyester, thermoplastic polyurethane, poly(methyl methacrylate), polyamide, bio-engineered polymers, cellulose triacetate, allyl diglycol carbonate, polyepisulfides, trivex, polyacrylics, polyols, polyamines, polyanhydrides, polycarboxilic acids, polyepoxides, polyisocyanates, polynorbornenes, polysiloxanes, polysilazanes, polystyrenes, polyolefmics, polyesters, polyimides, polyurethanes, polythiourethanes, polyallylics, polysulfides, polyvinylesters, polyvinylethers, polyarylenes, polyoxides, polysulfones, poly cyclo olefins, polyacrylonitriles, polyethylene terephtalates, polyetherimides, polypentenes, acrylate, polyurethane, styrene copolymers, CR39, MR7, MR8, 1.74, 1.56, and the like with the material used for the glue, psa, coating etc.

The indices of refraction n₁ and n₂ of the material used for the respective first and second lens members may be suitably selected to obtain targeted optical properties for the lens element. Preferably, the first and second indices of refraction n₁ and n₂ are different. Preferably, the first and second indices of refraction n₁ and n₂ is comprised between 1, 3 and 1.7 when measured for a wavelength of 550 nm. For example, the first and second indices of refraction n₁ and n₂ may be smaller than or equal to, or between any two of, 1.9; 1.8; 1.75; 1.73; 1.71; 1.69; 1.67; 1.65; 1.63; 1.61; 1.59; 1.57; 1.55; 1.54; 1.53; 1.52; 1.51; 1.50; 1.49; 1.48; 1.47; 1.46; 1.45; or lower, and/or greater than or equal to, or between any two of 1.1; 1.2; 1.25; 1.3; 1.31; 1.33; 1.35; 1.37; 1.39; 1.41; 1.43; 1.45; or higher.

The eye side surface of the first lens member and/or the object side surface of the second lens member may have any suitable shape, such as spherical or non-spherical. The term "spherical shape" refers to the curvature of the lens surface, which closely follows the shape of a perfect or almost perfect sphere. A spherical surface has a substantially uniform curvature over the entire surface of the lens element, which remains substantially the same in all meridians. A non-spherical surface should be understood as not being uniform over the entire surface of the lens element, with different curvatures in different meridians.

The eye side surface of the first lens member and/or the object side surface of the second lens member may have a toric shape. A toric surface has two principal meridians that are perpendicular to each other, often referred to as the "steep" and "flat" meridians. The curvature of the surface in these meridians is different.

The eye side surface of the first lens member and/or the object side surface of the second lens member may have an aspherical shape. An aspherical surface has a curvature that progressively vary over the surface of the lens element. The curvature along different meridians varies from the geometrical center of the lens element towards the periphery, for example, the curvature of the surface increases or decreases towards the peripheral part of the surface. The shape of an aspherical surface is typically described using a mathematical equation, such as a conic section or a polynomial equation.

The eye side surface of the first lens member and/or the object side surface of the second lens member may have progressive addition lens profile. In the sense of the disclosure, a "progressive addition lens profile surface" should be understood as a surface comprising two areas having different spherical surface, and a third areas joining the two first areas, along which the curvature value of the surface transitions from the first the second curvature values of the corresponding two areas.

Alternatively, the eye side surface of the first lens member and/or the object side surface of the second lens member may have a plano shape. A plano surface has no curvature over the entire surface of the lens element.

### 1.2. DIFFRACTIVE MICROSTRUCTURES

As illustrated in figure 1, at least one of the first lens member 12a and/or the second lens member 12b comprises a plurality of diffractive microstructures.

The plurality of diffractive microstructures are designed to provide an optical function that diffracts or bends light in specific ways. For example, diffractive microstructures can control the phase and amplitude of the diffracted light, thereby modifying the shape of the incident light beam into a single focused point. Alternatively, diffractive microstructures can be used to split a single incident beam of light into multiple beams, redirecting them along different paths, thereby creating a blur or volume of non-focused light.

### 1.2.1 ARRAYS OF LENSLETS

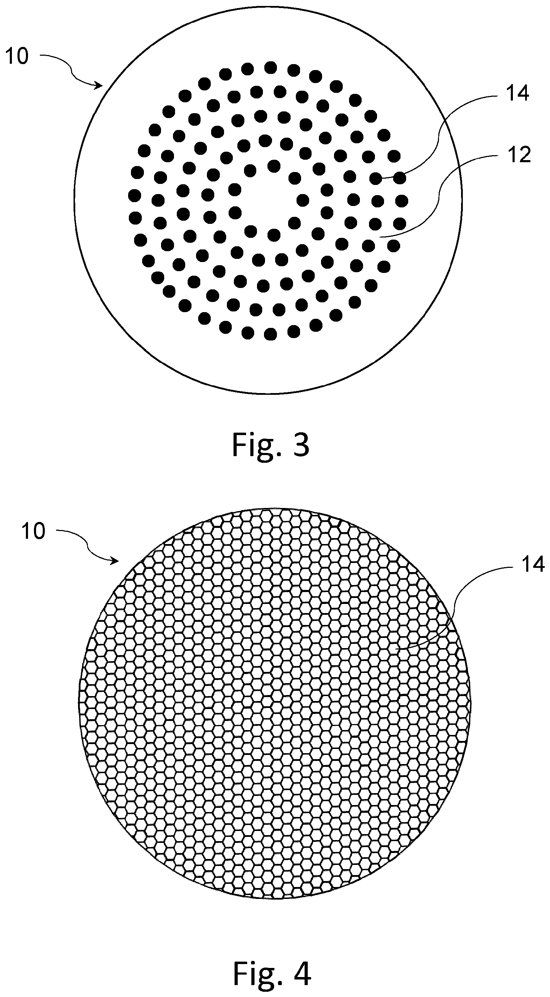

As illustrated in figure 3, the plurality of diffractive microstructures 14 may be a plurality of arrays of lenslets.

Lenslets have a contour shape circumscribed by a circle having a diameter smaller than or equal to 3.0 mm, for example smaller than or equal to 2.5mm, preferably smaller than or equal to 2.0mm, more preferably smaller than or equal to 1.5 mm, for example smaller than or equal to 1.0 mm. The lenslets may further be characterized by their largest inscribed circle that has a diameter greater than or equal to 0.1 mm, preferably greater than or equal to 0.2mm, more preferably greater than or equal to 0.4mm, even more preferably greater than or equal to 0.5mm, for example greater than or equal to 0.6 mm.

As represented in figure 3, at least part, for example more than 50%, preferably all, of the lenslets 14 may be contiguous.

As represented in figure 4, at least part, for example more than 50%, preferably all, of the lenslets 14 may be non-contiguous.

In the sense of the disclosure, two lenslets located on a surface of the lens element are contiguous if there is a path supported by said surface that links the two lenslets and if along said path one does not reach the basis surface of the lens element on which the lenslets are superimposed.

When the surface on which the at least two lenslets are superimposed is spherical, the basis surface corresponds to said spherical surface. In other words, two lenslets superimposed on a spherical surface are contiguous if there is a path supported by said spherical surface and linking them and if along said path one may not reach the spherical surface.

When the surface on which the at least two lenslets are superimposed is non-spherical, the basis surface corresponds to the local spherical surface that best fits said non-spherical surface. In other words, two lenslets superimposed on a non-spherical surface are contiguous if there is a path supported by said non-spherical surface and linking them and if along said path one may not reach the spherical surface that best fit the non-spherical surface.

The density of lenslets on the lens element is comprised between 20% and 100%, preferably between 30% and 70%, for example between 40% and 50%. For example, for every circular zone having a radius comprised between 2 and 4 mm comprising a geometrical center located at a distance of the optical center of the lens element greater or equal to said radius + 5mm, the ratio between the sum of areas of the parts of lenslets located inside said circular zone and the area of said circular zone is comprised between 20% and 100%, preferably between 30% and 70%, for example between 40% and 60%.

As illustrated in figure 4, the lenslets 14 may be organized over the entire surface of the lens element 10. In other words, the ratio between the sum of the projected areas of the lens element covered by lenslets and the total is equal to 1.

The lenslets may be positioned on a structured mesh, for example a squared mesh or a hexagonal mesh or a triangle mesh or an octagonal mesh.

As illustrated in figure 3, the lenslets may be organized in a plurality of concentric rings centered on an optical center and/or a geometric center of the surface of the lens member on which the lenslets are disposed.

The radial distance between two successive concentric rings of lenslets may be identical. Alternatively, the radial distance between two successive concentric rings of lenslets, may vary. Preferably, the distance between two successive concentric rings of lenslets is greater than or equal to 1.00 mm, preferably 2.0 mm, more preferably 4.0 mm.

### 1.2.2 DIFFRACTIVE LENSLETS

The diffractive microstructures 14 may be diffractive lenslets. In the sense of the disclosure, a "diffractive lenslet" is to be understood as a small-scale optical element that acts as a miniature diffractive lens.

The diffractive microstructures may be π-Fresnel lenslets. In the sense of the disclosure π-Fresnel lenslets are Fresnel lenslets whose phase function ψ(r) has π phase jumps at the nominal wavelength λ₀, as opposed to unifocal Fresnel lenses whose phase jumps are multiple values of 2π. A π-Fresnel lenslet diffracts light mainly in two diffraction orders (order 0 and +1), for example associated to dioptric powers P(λ₀) = 0 δ and a positive one P(λ₀) = 3 δ, with λ₀ = 550 nm.

Advantageously, π-Fresnel lenslets allows diffracting incident light towards two different planes, thereby providing two different optical powers.

### 2. METHOD

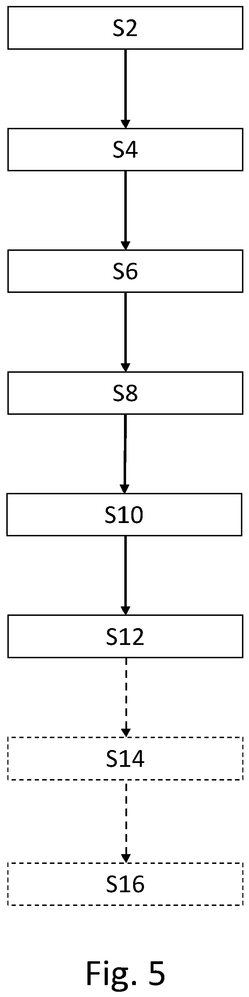

As illustrated in figure 5, the method for providing a lens element according to the disclosure comprises a step S2 of obtaining first lens member data.

The first lens member data comprises at least data relating to the shape of a first lens member having a surface (F1) comprising diffractive microstructures and to a first refractive index n₁ of this first lens member. In the sense of the disclosure, the "shape" of the first lens member should be understood as parameters values and/or equations that allows defining the structure of the first lens member, such as the curvature of the surfaces of the first lens member and/or the thickness of the first lens member.

As illustrated in figure 5, the method for providing a lens element according to the disclosure comprises a step S4 of obtaining second lens member data.

Similarly to the first lens member data, the second lens member data comprises at least data relating to the shape of a second lens member having a surface (F2) complementary to the surface (F1) of the first lens member comprising the plurality of diffractive microstructures and to a second refractive index n₂ of this second lens member. In the sense of the disclosure, the "shape" of the second lens member should be understood as parameters values and/or equations that allows defining the structure of the second lens member, such as the curvature of the surfaces of the second lens member and/or the thickness of the second lens member.

As illustrated in figure 5, the method for providing a lens element according to the disclosure further comprises a step S6 of generating a lens element model.

In the sense of the disclosure, a "lens element model" is a simulation or simplified representation or mathematical description of the behavior and characteristics of a lens element. The lens element model is a theoretical framework allowing for the analysis and prediction of how light interacts with the lens element and how the lens affects the propagation of light. Typically, optical lens models are based on several fundamental principles of optics, including geometric optics and wave optics.

Advantageously, the lens element model accurately simulates the optical properties of the lens element.

The lens element model is generated based on the first lens member data and the second lens member data. Using the data relating to the shape and index of refraction of the lens members, a lens element model is generated by simulating both lens members and applying their complementary surfaces (F1) and (F2) together.

As illustrated in figure 5, the method for providing a lens element according to the disclosure further comprises a step S8 of obtaining energy balance data.

The energy balance data comprises at least data relating to at least two maximum levels of modulation transfer function (MTF) of the lens element model in at least two distinct planes (z₁, z₂).

The modulation transfer function (MTF) is a well-known quantitative measurement that describes the imaging performance of an optical system. The MTF characterizes an optical system's ability to reproduce fine details and resolve spatial frequencies. It measures the contrast transfer as a function of the spatial frequency of the object being imaged and provides information about the optical system's resolving power and the amount of contrast degradation for different spatial frequencies.

Typically, a high MTF value indicates that the optical system can effectively reproduce high-frequency details with minimal contrast loss, resulting in a sharp and detailed image. Conversely, a low MTF value indicates a reduction in contrast and loss of fine details as the spatial frequency increases.

The modulation transfer function may be determined by measuring the 3D surface of the lens element, determining a 2D representation of optical path differences of a light beam arriving normal to the lens element, determining the point spread function over a pupil aperture, for example having a diameter comprised between 2mm and 8mm, preferably between 3mm and 6mm, for example 4mm, and centered at 6.6 mm from the optical center of the lens element, and determining the modulation transfer function over said pupil by a Fourier transform operation.

Advantageously, the utilization of a lens model provides a efficient and facilitated way to determine the MTF profile of a lens element without requiring the involvement of a wearer or a eye-lens optical system.

The energy balance data represents predefined or targeted position of two planes (z₁, z₂) in which the clearest images of an object passing through the lens element is obtained, i.e., the two planes for which maximum values of MTF can be obtained. The two planes (z₁, z₂) are parallel with the normal plane tangent with the optical and/or geometrical center of the lens element.

When the diffractive microstructures are π-Fresnel lenslets, the at least two maximum levels of MTF measured in the planes z1 and z2 respectively corresponds to the first order of diffraction 0 and the second order of diffraction +1 of the π-Fresnel lenslets.

As illustrated in figure 5, the method for providing a lens element according to the disclosure further comprises a step S10 of optimizing the lens element model. The lens element model is optimized based on the energy balance data.

During the optimization step, the lens element model are optimized by modifying, refining, and improving the first and second lens members data. Typically, parameters values and/or equations defining the structure of the first and/or second lens members are modified to obtain targeted optical properties.

Preferably, at least one of the first and second refractive index n₁ and n₂ of the first and/or second lens member is varied so that over at least one pupil englobing at least part of the plurality of diffractive microstructures of the lens member, the at least two targeted maximum levels of MTF defined by the energy balance data can be measured in the at least two distinct planes (z₁, z₂).

Advantageously, optimizing the index of refraction of at least one lens member allows easily tuning the optical function of the lens member while conserving the initial surface design of the lens element. Indeed, it has been observed by the inventors that modifying the combination of indices of refraction of the two lens members allows obtaining a wild range of diffractive profiles for the lens member.

As illustrated in figure 5, the method for providing a lens element according to the disclosure further comprises a step S12 of providing the lens element.

The lens element is obtained by manufacturing and assembling the first and second lens members based on the optimized lens element model. Alternatively, the first and/or second lens members may be selected from a bank of premade lens members. The first and second lens members are assembled so that the diffractive microstructures are encapsulated between said first and second lens members.

As illustrated in figure 5, the method for providing a lens element according to the disclosure may further comprise a step S14 of providing prescription data. The prescription data relates at least to a prescription adapted for a wearer.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision. The prescription may comprise an indication that the eye of the wearer has no defect and that no refractive power is to be provided to the wearer.

The prescription in ophthalmic field may comprise, in addition to the power prescription, an astigmatism prescription. Such a prescription is composed of an axis value (in degrees) and a module value (in diopters). The module value represents the difference between the maximal and minimal power in a given direction allowing to correct the visual default of a wearer. Following the convention, the axis represents the orientation of one of the two powers versus a reference axis and following a given rotation direction. TABO convention may be used. In this convention the reference axis is horizontal and the rotation direction is counterclockwise when looking at the wearer. A 45° axis corresponds to an axis orientated obliquely linking, when looking at the wearer, the upper right quadrant to the lower left quadrant. Such an astigmatism prescription is measured for the wearer in far vision. The term 'astigmatism' is used to refer to the couple (module, axis). That term is sometimes used to simply designate the module. The skilled person easily understands what it refers to depending on the context. The skilled person is also aware that the power/astigmatism prescription for a wearer is commonly described with the terms sphere, cylinder and axis.

The wearing conditions are to be understood as the position of the lens element with relation to the eye of a wearer, for example defined by a pantoscopic angle, a wrap angle, a Cornea to lens distance, and eventually any of a Pupil-cornea distance, a center of rotation of the eye (ERC) to pupil distance, an ERC to lens distance.

The Cornea to lens distance is the distance along the visual axis of the eye in the primary position (usually taken to be the horizontal) between the cornea and the back surface of the lens; for example comprised between 6 and 20, for example 8 and 16 mm, preferably 10 and 14 mm, more preferably equal to 12mm.

The Pupil-cornea distance is the distance along the visual axis of the eye between its pupil and cornea; usually comprised between 1 and 4 mm, for example equal to 2mm.

The ERC to pupil distance is the distance along the visual axis of the eye between its center of rotation (ERC) and cornea; for example comprised between 10 and 15 mm, preferably 11 and 12 mm, more preferably equal to 11.5mm.

The ERC to lens Q'O distance is the distance along the visual axis of the eye in the primary position (usually taken to be the horizontal) between the ERC of the eye and the back surface of the lens, for example comprised between 20 and 30 mm, preferably 22.5 and 28 mm, more preferably equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example comprised between -25° and +5°, preferably -12° and 0°, more preferably between -10° and -6°, for example equal to -8° or 0°, .

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example comprised between -10° and +25°, preferably 0° and 10°, more preferably between 0° and +5°, for example equal to 0°.

An example of standard wearing condition may be defined by a pantoscopic angle of - 8°, a Cornea to lens distance of 12 mm, a Pupil-cornea distance of 2 mm, an ERC to pupil distance of 11.5 mm, an ERC to lens distance of 25.5 mm and a wrap angle of 0°.

Another example of standard wearing condition more adapted for younger wearers may be defined by a pantoscopic angle of 0°, a Cornea to lens distance of 12 mm, a Pupil-cornea distance of 2 mm, an ERC to pupil distance of 11.5 mm, a ERC to lens distance of 25.5 mm and a wrap angle of 0°.

Advantageously, the prescription of a person provides sufficient information to determine the position of the retina of the eye of the person.

As illustrated in figure 5, the method for providing a lens element according to the disclosure may further comprise a step S16 of manufacturing an ophthalmic lens. The lens element is manufactured based on the prescription data to obtain an ophthalmic lens adapted to the wearer.

Typically, at least one of the eye side surfaces of the first lens member and/or the object side surface of the second lens member forming the lens element is processed, for example grinded and edged, to modify the design of the lens element. Furthermore, a layer of coating element may be applied over at least one part, preferably all, of a surface of the lens element. The at least one layer of coating element may comprise features selected from the group consisting of anti-scratch, anti-reflection, anti-smudge, anti-dust, UV30 filtration, blue light-filtration, anti-abrasion features.

Advantageously, having the diffractive microstructures encapsulated between the first and second lens members allows simplifying the manufacturing step.

During the step of manufacturing the ophthalmic lens, at least one surface of the lens member may be modified to have the plane z₁, in which a maximum level of MTF can be measured over a predefined pupil, coincides with the plane of the retina of the wearer for which the lens is adapted to. In other words, at least one surface is manufactured so that when the wearer is wearing the ophthalmic lens in standard wearing conditions and looks straight ahead at an object located at infinity, light from the object passing through the diffractive microstructures and the eye will form a clear image on its retina.

Advantageously, it allows providing an ophthalmic lens improving the visual acuity of the wearer.

During the step of manufacturing the ophthalmic lens, at least one surface of the lens member may be modified to have the plane z₂, in which a maximum level of MTF can be measured over a predefined pupil, is located in front or behind the plane of the retina of the wearer for which the lens is adapted to. In other words, at least one surface is manufactured to have the ophthalmic lens providing a blurred image or a defocus to the wearer wearing the ophthalmic lens in standard wearing conditions.

Advantageously, providing a blurred image or a defocus in front or behind the retina allows creating a stop signal that slows down the progression of an abnormal refraction of the eye of the wearer.

The disclosure further relates to a computer program product comprising one or more stored sequences of instructions that are accessible to a processor and which, when executed by the processor, causes the processor to carry out the steps of a method according to the disclosure.

The disclosure further relates to a computer readable medium carrying one or more sequences of instructions of the computer program product according to the disclosure.

Furthermore, the disclosure relates to a program which makes a computer execute a method of the disclosure.

The disclosure also relates to a computer-readable storage medium having a program recorded thereon; where the program makes the computer execute a method of the disclosure.

The disclosure further relates to a device comprising a processor adapted to store one or more sequence of instructions and to carry out at least one of the steps of a method according to the disclosure.

The disclosure further relates to a non-transitory program storage device, readable by a computer, tangibly embodying a program of instructions executable by the computer to perform a method of the present disclosure.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. A computer implemented method of providing a lens element for the purpose of being manufactured, the lens element comprising a plurality of **encapsulated** diffractive microstructures, the method comprising:
(S2) **obtaining first lens member data,** the first lens member data comprising at least data relating to a shape of a first lens member and to a first refractive index n₁ of the first lens member, at least one surface (F1) of the first lens member comprising a plurality of diffractive microstructures;
(S4) **obtaining second lens member data,** the second lens member data comprising at least data relating to a shape of a second lens member and to a second refractive index n₂ of the second lens member, the second lens member comprising at least one surface (F2) complementary to the surface of the first lens member comprising the plurality of diffractive microstructures;
(S6) **generating a lens element model** based on the first and second lens member data, the lens element model being formed by applying the complementary surfaces of the first and second lens member together,
(S8) **obtaining energy balance data,** the energy balance data comprising at least data relating to at least two maximum levels of MTF in at least two distinct planes (z₁, z₂);
(S10) **optimizing the lens element model** based on the energy balance data, the lens member being optimized by varying at least one of the first and second refractive index n1 and n2 of the first and second lens member so that over at least one pupil englobing at least part of the plurality of diffractive microstructures of the lens member, the at least two maximum levels of MTF can be measured in the at least two distinct planes (z₁, z₂);
(S12) **providing the lens element** by assembling at least the first and second lens members based on the optimized lens element model.

2. The method according to claim 1 further comprising a step (S14) of providing prescription data, the prescription data relating at least to a prescription adapted for a wearer; and a step (S16) of manufacturing an ophthalmic lens from the lens element based on the prescription data.

3. The method according to claim 2, wherein during the step of manufacturing the ophthalmic lens, at least one surface of the lens element is modified so that the first plane z₁ in which a maximum level of MTF can be measured over the pupil coincides with the plane of the retina of the wearer.

4. The method according to any of claims 2 or 3, wherein during the step of manufacturing the ophthalmic lens, at least one surface of the lens element is modified so that the second plane z₂ in which a maximum level of MTF can be measured over the pupil is located in front or behind the plane of the retina of the wearer.

5. The method according to any of the preceding claims, wherein at least part of the plurality of diffractive microstructures are arrays of lenslets.

6. The method according to claim 5, wherein the lenslets are organized over the entire surface of the lens element.

7. The method according to any of claims 5 to 6, wherein at least part, for example all, of the lenslets are non-contiguous.

8. The method according to any of claims 5 to 6, wherein at least part, for example all, of the lenslets are contiguous.

9. The method according to any of claims 5 to 8, wherein the lenslets have a contour shape circumscribed by a circle having a diameter smaller than or equal to 3.0 mm, for example smaller than or equal to 1.5 mm, for example smaller than or equal to 1.0 mm, and the largest inscribed circle has a diameter greater than or equal to 0.1 mm, for example greater than or equal to 0.6 mm.

10. The method according to any of claims 5 to 9, wherein the lenslets are organized in concentric rings.

11. The method according to any of claims 1 to 10, wherein at least part of the plurality of diffractive microstructures are diffractive lenslets.

12. The method according to claim 11, wherein at least part, preferably all, of the diffractive lenslets are π-Fresnel lenslets.

13. The method according to claim 12, wherein the at least two maximum levels of MTF measured in the planes z₁ and z₂ correspond to the first order of diffraction and the second order of diffraction of the π-Fresnel lenslets.

14. The method according to any of claims 1 to 13, wherein at least one of the first or second lens member is a wafer, a film sheet, an adhesive layer, or a coating layer.

## Patentansprüche

1. Computerimplementiertes Verfahren zur Bereitstellung eines Linsenelements zum Zweck der Herstellung, wobei das Linsenelement mehrere verkapselte diffraktive Mikrostrukturen umfasst, wobei das Verfahren Folgendes umfasst:
(S2) Erhalten von Daten eines ersten Linsenelements, wobei die Daten des ersten Linsenelements mindestens Daten umfassen, die sich auf eine Form eines ersten Linsenelements und auf einen ersten Brechungsindex n₁ des ersten Linsenelements beziehen, wobei zumindest eine Oberfläche (F1) des ersten Linsenelements mehrere diffraktive Mikrostrukturen umfasst;
(S4) Erhalten von Daten eines zweiten Linsenelements, wobei die Daten des zweiten Linsenelements mindestens Daten umfassen, die sich auf eine Form eines zweiten Linsenelements und auf einen zweiten Brechungsindex n₂ des zweiten Linsenelements beziehen, wobei das zweite Linsenelement zumindest eine Oberfläche (F2) umfasst, die komplementär zu der Oberfläche des ersten Linsenelements ist, die die mehreren diffraktiven Mikrostrukturen umfasst;
(S6) Erzeugen eines Linsenelementmodells basierend auf den Daten des ersten und des zweiten Linsenelements, wobei das Linsenelementmodell durch Anwenden der komplementären Oberflächen des ersten und zweiten Linsenelements zusammen gebildet wird,
(S8) Erhalten von Energiebilanzdaten, wobei die Energiebilanzdaten mindestens Daten umfassen, die sich auf mindestens zwei maximale Niveaus von MTF in mindestens zwei unterschiedlichen Ebenen (z₁, z₂) beziehen;
(S10) Optimieren des Linsenelementmodells basierend auf den Energiebilanzdaten, wobei das Linsenelement durch Variieren des ersten und/oder des zweiten Brechungsindex n1 und n2 des ersten und des zweiten Linsenelements optimiert wird, so dass über zumindest eine Pupille, die mindestens einen Teil der mehreren diffraktiven Mikrostrukturen des Linsenelements einschließt, die mindestens zwei maximalen Niveaus von MTF in den mindestens zwei verschiedenen Ebenen (z₁, z₂) gemessen werden können;
(S12) Bereitstellen des Linsenelements durch Zusammenbauen mindestens des ersten und des zweiten Linsenelements basierend auf dem optimierten Linsenelementmodell.

2. Verfahren nach Anspruch 1, ferner umfassend einen Schritt (S14) des Bereitstellens von Rezeptdaten, wobei sich die Rezeptdaten zumindest auf ein für einen Träger angepasstes Rezept beziehen; und einen Schritt (S16) des Herstellens einer ophthalmischen Linse aus dem Linsenelement basierend auf den Rezeptdaten.

3. Verfahren nach Anspruch 2, wobei während des Schritts des Herstellens der ophthalmischen Linse zumindest eine Oberfläche des Linsenelements so modifiziert wird, dass die erste Ebene z₁, in der ein maximales MTF-Niveau über der Pupille gemessen werden kann, mit der Ebene der Netzhaut des Trägers zusammenfällt.

4. Verfahren nach einem der Ansprüche 2 oder 3, wobei während des Schritts des Herstellens der ophthalmischen Linse zumindest eine Oberfläche des Linsenelements so modifiziert wird, dass sich die zweite Ebene z₂, in der ein maximales MTF-Niveau über der Pupille gemessen werden kann, vor oder hinter der Ebene der Netzhaut des Trägers befindet.

5. Verfahren nach einem der vorhergehenden Ansprüche, wobei zumindest ein Teil der mehreren diffraktiven Mikrostrukturen Mikrolinsenarrays sind.

6. Verfahren nach Anspruch 5, wobei die Mikrolinsen über der gesamten Oberfläche des Linsenelements organisiert sind.

7. Verfahren nach einem der Ansprüche 5 bis 6, wobei zumindest ein Teil, zum Beispiel alle, der Mikrolinsen nicht zusammenhängend sind.

8. Verfahren nach einem der Ansprüche 5 bis 6, wobei zumindest ein Teil, zum Beispiel alle, der Mikrolinsen zusammenhängend sind.

9. Verfahren nach einem der Ansprüche 5 bis 8, wobei die Mikrolinsen eine Konturform aufweisen, die von einem Kreis mit einem Durchmesser kleiner als oder gleich 3,0 mm, zum Beispiel kleiner als oder gleich 1,5 mm, zum Beispiel kleiner als oder gleich 1,0 mm, umschrieben wird, und der größte einbeschriebene Kreis einen Durchmesser größer als oder gleich 0,1 mm, zum Beispiel größer als oder gleich 0,6 mm aufweist.

10. Verfahren nach einem der Ansprüche 5 bis 9, wobei die Mikrolinsen in konzentrischen Ringen organisiert sind.

11. Verfahren nach einem der Ansprüche 1 bis 10, wobei zumindest ein Teil der mehreren diffraktiven Mikrostrukturen diffraktive Mikrolinsen sind.

12. Verfahren nach Anspruch 11, wobei zumindest ein Teil, vorzugsweise alle, der diffraktiven Mikrolinsen π-Fresnel-Mikrolinsen sind.

13. Verfahren nach Anspruch 12, wobei die mindestens zwei maximalen MTF-Niveaus, die in den Ebenen z₁ und z₂ gemessen werden, der ersten Beugungsordnung und der zweiten Beugungsordnung der π-Fresnel-Mikrolinsen entsprechen.

14. Verfahren nach einem der Ansprüche 1 bis 13, wobei das erste und/oder das zweite Linsenelement ein Wafer, eine Folienbahn, eine Klebstoffschicht oder eine Beschichtungsschicht ist.

## Revendications

1. Procédé mis en œuvre par ordinateur de fourniture d'un élément formant verre en vue de sa fabrication, l'élément formant verre comprenant une pluralité de microstructures diffractives encapsulées, le procédé comprenant :
(S2) l'obtention de données de premier élément de verre, les données de premier élément de verre comprenant au moins des données relatives à une forme d'un premier élément de verre et à un premier indice de réfraction n₁ du premier élément de verre, au moins une surface (F1) du premier élément de verre comprenant une pluralité de microstructures diffractives ;
(S4) l'obtention de données de second élément de verre, les données de second élément de verre comprenant au moins des données relatives à une forme d'un second élément de verre et à un second indice de réfraction n₂ du second élément de verre, le second élément de verre comprenant au moins une surface (F2) complémentaire à la surface du premier élément de verre comprenant la pluralité de microstructures diffractives ;
(S6) la génération d'un modèle d'élément formant verre sur la base des données de premier et second éléments de verre, le modèle d'élément formant verre étant formé par application des surfaces complémentaires des premier et second éléments de verre l'une contre l'autre,
(S8) l'obtention de données de bilan énergétique, les données de bilan énergétique comprenant au moins des données concernant au moins deux niveaux maximaux de FTM dans au moins deux plans distincts (z₁, z₂) ;
(S10) l'optimisation du modèle d'élément formant verre sur la base des données de bilan énergétique, l'élément de verre étant optimisé en faisant varier au moins l'un des premier et second indices de réfraction n1 et n2 des premier et second éléments de verre de sorte que, sur au moins une pupille englobant au moins une partie de la pluralité de microstructures diffractives de l'élément de verre, les au moins deux niveaux maximaux de FTM puissent être mesurés dans les au moins deux plans distincts (z₁, z₂) ;
(S12) la réalisation de l'élément formant verre par assemblage d'au moins les premier et second éléments de verre sur la base du modèle d'élément formant verre optimisé.

2. Procédé selon la revendication 1, comprenant en outre une étape (S14) de fourniture de données de prescription, les données de prescription se rapportant au moins à une prescription adaptée pour un porteur ; et une étape (S16) de fabrication d'un verre ophtalmique à partir de l'élément formant verre sur la base des données de prescription.

3. Procédé selon la revendication 2, dans lequel pendant l'étape de fabrication du verre ophtalmique, au moins une surface de l'élément formant verre est modifiée de sorte que le premier plan z₁ dans lequel un niveau maximal de FTM peut être mesuré sur la pupille coïncide avec le plan de la rétine du porteur.

4. Procédé selon l'une quelconque des revendications 2 ou 3, dans lequel, pendant l'étape de fabrication du verre ophtalmique, au moins une surface de l'élément formant verre est modifiée de sorte que le second plan z₂ dans lequel un niveau maximal de FTM peut être mesuré sur la pupille soit situé devant ou derrière le plan de la rétine du porteur.

5. Procédé selon l'une quelconque des revendications précédentes, dans lequel au moins une partie de la pluralité de microstructures diffractives sont des réseaux de microlentilles.

6. Procédé selon la revendication 5, dans lequel les microlentilles sont organisées sur toute la surface de l'élément formant verre.

7. Procédé selon l'une quelconque des revendications 5 à 6, dans lequel au moins une partie, par exemple la totalité, des microlentilles sont non contiguës.

8. Procédé selon l'une quelconque des revendications 5 à 6, dans lequel au moins une partie, par exemple la totalité, des microlentilles sont contiguës.

9. Procédé selon l'une quelconque des revendications 5 à 8, dans lequel les microlentilles ont une forme de contour circonscrite par un cercle ayant un diamètre inférieur ou égal à 3,0 mm, par exemple inférieur ou égal à 1,5 mm, par exemple inférieur ou égal à 1,0 mm, et le plus grand cercle inscrit a un diamètre supérieur ou égal à 0,1 mm, par exemple supérieur ou égal à 0,6 mm.

10. Procédé selon l'une quelconque des revendications 5 à 9, dans lequel les microlentilles sont organisées en anneaux concentriques.

11. Procédé selon l'une quelconque des revendications 1 à 10, dans lequel au moins une partie de la pluralité de microstructures diffractives sont des microlentilles diffractives.

12. Procédé selon la revendication 11, dans lequel au moins une partie, de préférence la totalité, des microlentilles diffractives sont des microlentilles π-Fresnel.

13. Procédé selon la revendication 12, dans lequel les au moins deux niveaux maximaux de FTM mesurés dans les plans z₁ et z₂ correspondent au premier ordre de diffraction et au second ordre de diffraction des microlentilles de π-Fresnel.

14. Procédé selon l'une quelconque des revendications 1 à 13, dans lequel au moins l'un du premier ou du second élément de verre est une plaquette, une feuille de film, une couche adhésive ou une couche de revêtement.
